# EUROPÄISCHE PATENTANMELDUNG

(11) **EP 0 573 752 A1**
(43) Veröffentlichungstag der Anmeldung: **15.12.1993**
(21) Anmeldenummer: 93105565.1
(22) Anmeldetag: 03.04.1993
(51) Int. Cl.: H04J 14/08, H04J 3/04

(54) **Optischer Parallel-Seriell-Umsetzer und optischer Seriell-Parallel-Umsetzer**

(30) Priorität: 15.04.1992 DE 4212603
(71) Anmelder: Alcatel SEL Aktiengesellschaft, D-70435 Stuttgart (DE); ALCATEL N.V., NL-1077 XX Amsterdam (NL)
(72) Erfinder: Böttle, Dietrich, W-7335 Salach (DE)
(74) Vertreter: Brose, Gerhard

(57) **Zusammenfassung**

Ein- und Auskopplung mehrerer Datenströme in einen bzw. aus einem beliebigen Streckenabschnitt einer (gegebenen) optischen Übertragungsstecke durch eine Vorrichtung zur Parallel-Seriell-Umsetzung und eine Vorrichtung zur Seriell-Parallel-Umsetzung der Datenströme auf die optische Übertragungsstrecke gelöst.

Dabei erfolgt die Ein- und Auskopplung der einzelnen Datenströme mittels optischer Modulatoren bzw. optischer Verzweiger, welche in die optische Übertragungsstrecke eingegliedert sind.

Mehrere Datenströme werden parallel-seriell umgesetzt mittels zusätzlich eingegliederter optischer Zeitverzögerungsglieder, welche eine bitweise Verschachtelung der Datenströme (bit-interleaved) gewährleisten.

## Beschreibung

Die Erfindung betrifft eine Vorrichtung zur Parallel-Seriell-Umsetzung nach Anspruch 1 und eine Vorrichtung zur Seriell-Parallel-Umsetzung nach Anspruch 4.

Optische Übertragungsstrecken werden aufgrund ihrer besonderen Qualitätsmerkmale wie z.B. hohe Übertragungskapazität, geringe Dämpfung und kein Nebensprechen, vorzugsweise in großen Telekommunikations-Netzen eingesetzt. Dabei werden mehrere Teilnehmerverbindungen, z.B. im Frequenzmultiplexverfahren oder Zeitmultiplexverfahren, über eine optische Übertragungsstrecke (Lichtwellenleiter) geführt.

Der in der Druckschrift "Electronics Letters", 1987, Band 23, Nr. 24 auf den Seiten 1270 und 1271 veröffentlichte Artikel "16 Gbit/s Fibre Transmission Experiment using Optical Time-Division Multiplexing" von R.S. Tucker et al. dokumentiert ein optisches Zeitmultiplex-System. Es werden dabei vier parallele, elektrische Datenströme mittels optischer Sender und Ti:LiNb03-Modulatoren in vier parallele, optische Daten-Impulsströme gewandelt. Über elektrische Zeitverzögerungsglieder werden die optischen Sender derart zeitversetzt angesteuert (quarter bit-period time delays), daß die parallelen optischen Daten-Impulsströme in einer Raummultiplexstufe (MUX) überlappungsfrei auf einen Lichtwellenleiter umgesetzt werden. Die Rückgewinnung der vier elektrischen Datenströme am Ende des Lichtwellenleiters erfolgt mittels einer Demultiplexer-Stufe (DEMUX), welche kaskadierte optische Richtungs-Schalter (directional coupler switches) enthält. Vier optische Empfänger sind der Demultiplexer-Stufe nachgeschaltet.

Das vorgestelllte optische Zeitmultiplex-System ist in sich abgeschlossen. Die Umsetzung der elektrischen Datenströme mittels Sende-Schaltung und Empfangs-Schaltung auf den Lichtwellenleiter erfolgt an dessen Anfang bzw. an dessen Ende.

Eine Integration der Sende-Schaltung und der Empfangs-Schaltung in einen beliebigen Streckenabschnitt einer gegebenen optischen Übertragungsstrecke ist nicht möglich.

Die Anbindung möglichst vieler Datenquellen und Datensenken an eine optische Übertragungsstrecke soll aber auch dann möglich sein, wenn diese sich einzeln oder gruppenweise an unterschiedlichen Teilabschnitten der Übertragungsstrecke befinden. Dieses Problem stellt sich insbesondere bei Übertragungssystemen mit Ringstruktur oder in Schaltnetzwerken mit einem großen räumlichen Ausmaß, wie z.B. ATM-Systeme.

In der Druckschrift "NTT Review", 1991, Band 3, Nr. 2 wird auf den Seiten 98 - 101 in dem Artikel "Photonic Switching Technologies ..." von K. Yukimatsu et All ein optisches Höchstgeschwindigkeits-ATM-Netzwerk mit einer Übertragungsgeschwindigkeit von ca. 1 Tbit/s vorgestellt.

Dabei werden die ATM-Zellen mehrerer paralleler Dateneingänge in "cell-coders" zeitlich komprimiert und anschließend überlappungsfrei ineinander verschachtelt auf einer optischen Zeitmultiplex-Strecke übertragen.

An deren Ende werden die komprimierten ATM-Zellen mittels "cell selectors" parallelen Datenausgängen zugewiesen und mittels "cell buffers" zeitlich auf ihre ursprüngliche Form gedehnt. Der Artikel gibt keine hinreichend klare technische Lehre insbesondere in der Darstellung der "Cell"-Elemente, in welcher Nichtkonformitäten zwischen Text und Zeichnung auftreten. Trotzdem bleibt prinzipiell ersichtlich, daß die Datenübertragung zellenweise im Zeitmultiplex-Verfahren erfolgt und weder die eingangsseitige Sende-Schaltung noch die ausgangsseitige Empfangs-Schaltung in einen beliebigen Streckenabschnitt einer gegebenen optischen Übertragungsstrecke eingegliedert werden kann.

Aufgabe der Erfindung ist die Einkopplung und Auskopplung mehrerer zeitgleicher Datenströme in einem bzw. aus einem beliebigen Streckenabschnitt einer optischen Übertragungsstrecke.

Die Aufgabe wird erfindungsgemäß gelöst durch eine Vorrichtung nach der Lehre des Anspruchs 1 und eine Vorrichtung nach der Lehre des Anspruchs 4.

Gemäß Anspruch 1 werden die Datenströme durch Parallel-Seriell-Umsetzung auf eine optische Übertragungsstrecke geführt. Die Parallel-Seriell-Umsetzung erfolgt im wesentlichen mittels optischer Modulatoren und optischer Zeitverzögerungsglieder, die derart zusammenwirken, daß die Einspeisung der N Datenströme nach Art eines Schieberegisters mit N parallelen Eingängen erfolgt.

Dabei formen die optischen Modulatoren in Abhängigkeit der Datenströme das auf der optischen Übertragungsstrecke geführte Licht (optischer Signalträger). Demnach ist die Vorrichtung nach Anspruch 1 auch als ein optisches Schieberegister mit N parallelen Eingängen, einem seriellen, optischen Eingang und einem seriellen, optischen Ausgang zu verstehen. Je nach Modulator-Ansteuerung können die parallelen Datenströme sowohl elektrischer als auch optischer Natur sein. Die Vorrichtung ist in einen beliebigen Streckenabschnitt einer optischen Übertragungsstrecke integrierbar, da die Einkopplung der Datenströme ohne Zuhilfenahme zusätzlicher optischer Sender, sondern mittels optischer Modulatoren erfolgt. Damit ist keine prinzipielle Unterbrechung der optischen Übertragungsstrecke gegeben.

Gemäß Anspruch 4 werden die N Datenströme aus einem, auf der optischen Übertragungsstrecke geführten, seriellen Datenstrom durch Seriell-Parallel-Umsetzung zurückgewonnen. Die Seriell-Parallel-Umsetzung erfolgt im wesentlichen mittels optischer Verzweiger und optischer Zeitverzögerungsglieder, die eine parallele Auskopplung der N Datenströme aus der optischen Übertragungsstrecke ermöglichen. Demnach und analog zur letzteren Argumentation ist die Vorrichtung nach Anspruch 4 auch als ein optisches Schieberegister mit N parallelen Ausgängen, einem optischen, seriellen Eingang und einem optischen, seriellen Ausgang zu verstehen.

Diese Vorrichtung ist ebenfalls in einen beliebigen Streckenabschnitt einer optischen Übertragungsstrecke integrierbar, da die optischen Verzweiger keine prinzipielle Unterbrechung der optischen Übertragungsstrecke darstellen.

Vorteilhafte Weiterbildungen der Erfindung sind den Unteransprüchen zu entnehmen.

Nach Anspruch 2 wird mittels der Modulatoren die Vorrichtung in einen beliebigen Streckenabschnitt der optischen Übertragungsstrecke eingekoppelt, die z.B. einen Höchstgeschwindigkeits-Lichtwellenleiter-Ring darstellen kann. Die optische Übertragungsstrecke führt bereits zeitweise optische Datenimpulse, wie dieses z.B. in Asynchronen-Paketvermittlungs-Systemen auftreten kann. Die Vorrichtung nach Anspruch 2 ist demnach eine technische Variante nach Art einer aufschaltbaren Zeitvielfach-Stufe (Drop-In-Multiplexer). Somit können vorteilhaft an einer beliebigen Stelle des Lichtwellenleiter-Ringes Datenströme eingekoppelt werden, in solchen Zeitlücken, in denen kein Paketverkehr stattfindet.

Nach Anspruch 3 ist die Vorrichtung nach Art eines Zeitvielfach-Senders (Multiplex-Transmitter) weitergebildet. Die optische Übertragungsstrecke wird von einem Konstantlicht (optischer Träger) gespeist, welches an ihrem Anfangsabschnitt mittels den optischen Modulatoren geformt wird. Das Konstantlicht wird z.B. von einem Halbleiter-Laser emittiert und nach der Modulation durch die Vorrichtung in einen Lichtwellenleiter eingekoppelt.

Im folgenden wird die Erfindung anhand von Ausführungsbeispielen und unter Zuhilfenahme der beiliegenden Zeichnungen weiter erläutert.
- Fig. 1: zeigt eine Vorrichtung nach Art einer optischen, aufschaltbaren Zeitvielfach-Sendestufe (Drop-In-Multiplexer),
- Fig. 2: zeigt eine Vorrichtung nach Art eines optischen Zeitvielfach-Senders (Multiplex-Transmitter),
- Fig. 3: zeigt eine Vorrichtung nach Art einer optischen, aufschaltbaren Zeitvielfach-Empfangsstufe (Drop-Out-Multiplexer),
- Fig. 4: zeigt Impuls-Zeit-Diagramme bezüglich der Parallel-Seriell-Umsetzung.

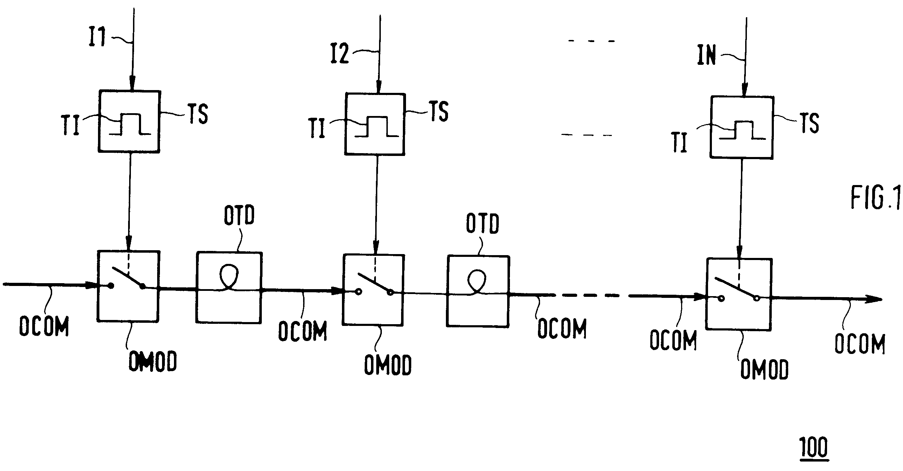

Die in der Fig. 1 dargestellte Schaltungsvariante enthält N optische Modulatoren OMOD, welche durch Ti:LiNb03-Schalter mit jeweils einem elektrischen Steuereingang dargestellt sind;
N-1 optische Zeitverzögerungsglieder OTD, welche jeweils aus einer Lichtwellenleiter-Schleife mit einer bestimmten Signal-Laufzeit bestehen und
N elektrischen Schaltgliedern TS, die jeweils aus einem UND-Logik-Gatter bestehen, welches von einem der Datenströme und einem asymmetrischen Taktsignal mit einem Schalt-Zeitintervall TI angesteuert wird.

Beginnend mit einem der optischen Modulatoren sind diese und die optischen Zeitverzögerungsglieder alternierend in Reihe geschaltet und so in einem Teilabschnitt eines Lichtwellenleiters OCOM seriell eingegliedert. Jeder optische Modulator bildet zusammen mit dem angekoppelten elektrischen Schaltglied und dem Modulator nachgeschalteten optischen Zeitverzögerungsglied eine schaltungstechnische Grundeinheit.

Durch Einfügen weiterer solcher Grundeinheiten in die oben beschriebene Reihenschaltung ist eine modulare Erweiterung der in Fig. 1 dargestellten Schaltung möglich. Dabei addieren sich die hier konstanten Signal-Laufzeiten der Lichtwellenleiter-Schleifen zu einer Gesamtverzögerungszeit auf. Diese ist nicht größer als der N-te Teil vom (N-1)-fachen der konstanten Daten-Impulsbreite der zeitgleichen Datenströme. Das Schalt-Zeitintervall ist nicht größer als die Signal-Laufzeit.

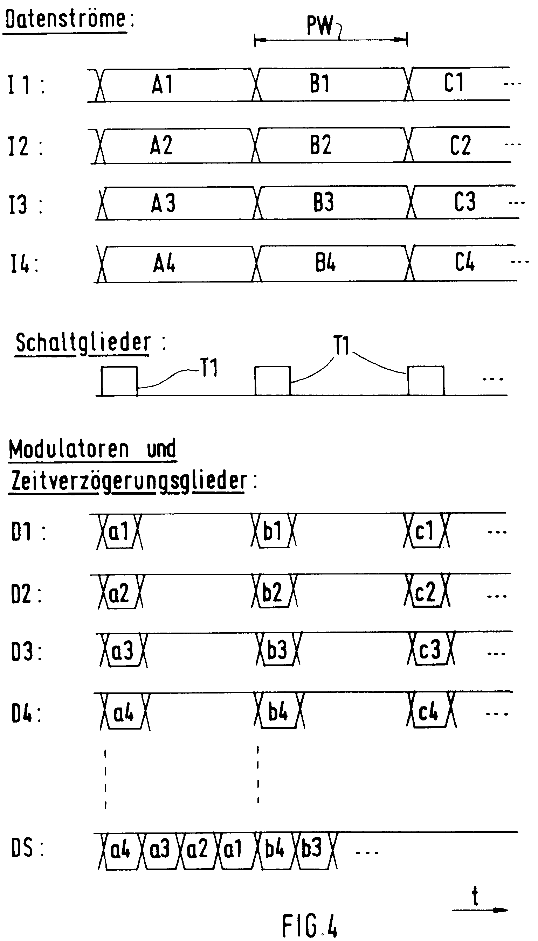

Durch obige Festlegungen und eine dunkeltastende Ansteuerung der optischen Modulatoren ist der Einsatz der in Fig. 1 dargestellten Vorrichtung als aufschaltbare Zeitvielfach-Stufe gewährleistet. Dieses wird im folgenden für den Fall einer Einkopplung von vier zeitgleichen Datenströmen (N=4) konkreter beschrieben, wobei hierzu auch die Fig. 4 herangezogenen wird:
Die vier Datenströme I1, ...., I4 stellen jeweils ein elektrisches ATM-Signal dar, welches über eine konstante Daten-Impulsbreite PW von z.B. 7,1 ns (entsprechend einer Übertragungsgeschwindigkeit von 140 Mbit/s) verfügt. Die vier Datenströme sind zueinander synchron und werden jeweils auf ein Schaltglied geführt. Dieses besteht aus einem UND-Logik-Gatter mit einem Eingang für den jeweiligen Datenstrom und einem zweiten Eingang für ein Taktsignal.

Das Taktsignal führt synchron zu den Datenströmen eine Taktimpuls mit einem Zeitintervall TI, welches dem vierten Teil der Daten-Impulsbreite entspricht. Somit werden die jeweiligen Daten-Impulse Ax, Bx, Cx, ... der ATM-Signale bis auf den vierten Teil der ursprünglichen Daten-Impulsbreite PW ausgeblendet.

Jeweils ein in inverser Logik (active low) ansteuerbarer optischer Ti:LiNb03-Schalter setzt die verkürzten elektrischen Daten-Impulse in entsprechend kurze optische Impulse D1, ..., D4 auf den Teilabschnitt eines optischen ATM-Höchstgeschwindigkeits-Lichtwellenleiter-Rings OCOM um. Dabei wird letzterer im Dunkeltastverfahen (active low) betrieben und der obige Teilabschnitt befindet sich in Ruhe, d.h. er führt Konstantlicht.

Mittels der Lichtwellenleiter-Schleifen OTD werden die kurzen optischen Impulse D1, ..., D4 der Reihe nach um drei, zwei, ein und kein Zeitintervall(e) TI verzögert und somit sukzessiv, überlappungsfrei auf den Lichtwellenleiter OCOM umgesetzt. Mit einer Übertragungsgeschwindigkeit von 560 Mbits (= 4 x 140 Mbit/s) führt dieser somit einen seriellen Datenstrom DS, welcher die serielle Verschachtelung der vier parallelen Datenströme I1, ..., I4 im Zeitvielfach-Verfahren darstellt. Eine wie oben beschriebene Einkopplung der parallelen Datenströme auf den Teilabschnitt des Lichtwellenleiter-Ringes erfolgt nur dann, wenn dieser keine (Ring-) Datensignale führt. Dazu werden durch einen der Vorrichtung vorgeschalteten optischen Detektor (z.B. Avalanche-Fotodiode) Zeitlücken im Ring-Datenverkehr festgestellt und zur Aktivierung der Einkopplung der parallelen Datenströme genutzt. Die Vorrichtung nach Fig. 1 ist demnach als aufschaltbare Zeitvielfach-Stufe (Drop-In-Multiplexer) zu verstehen.

Sie ist erfindungsgemäß in einen beliebigen Streckenabschnitt des Lichtwellenleiters integrierbar. Gleichfalls kann die Vorrichtung nach Fig. 1 durch Ankopplung an den Anfang des Lichtwellenleiters als optischer Zeitvielfach-Sender eingesetzt werden. Es werden keine optischen Sendemittel wie z.B. Laser oder Leuchtdioden benötigt.

Die Vorrichtung ist durch ihren modularen Aufbau vorteilhaft erweiterbar. Durch Variation einzelner Lichtwellenleiter-Schleifen OTD in ihrer Länge kann auch bei nicht äquidistanten Abständen der optischen Modulatoren OMOD (Einspeisepunkte der Datenströme I1, ..., I4) eine überlappungsfreie Parallel-Seriell-Umsetzung erfolgen. Dieser Fall ist bei lokal weit entfernten, jedoch zeitgleich geführten Datenströmen gegeben.

Die Vorrichtung nach Fig. 1 ist auch zur Einkopplung von busgeführten Datenworten geeignet, wobei die Eingänge I1, ..., IN jeweils einer Bitstelle des Datenwortes entsprechen. Die Reihenschaltung der optischen Modulatoren kann zur Prioritätsstufung der Bitstellen vorteilhaft genutzt werden, indem von der höchstwertigsten Bitstelle (MSB: most significant bit) bis zur niederwertigsten Bitstelle (LSB: least significant bit) die Bitstellen des Datenwortes nacheinander jeweils den Eingängen I1 bis IN zugeordnet werden.

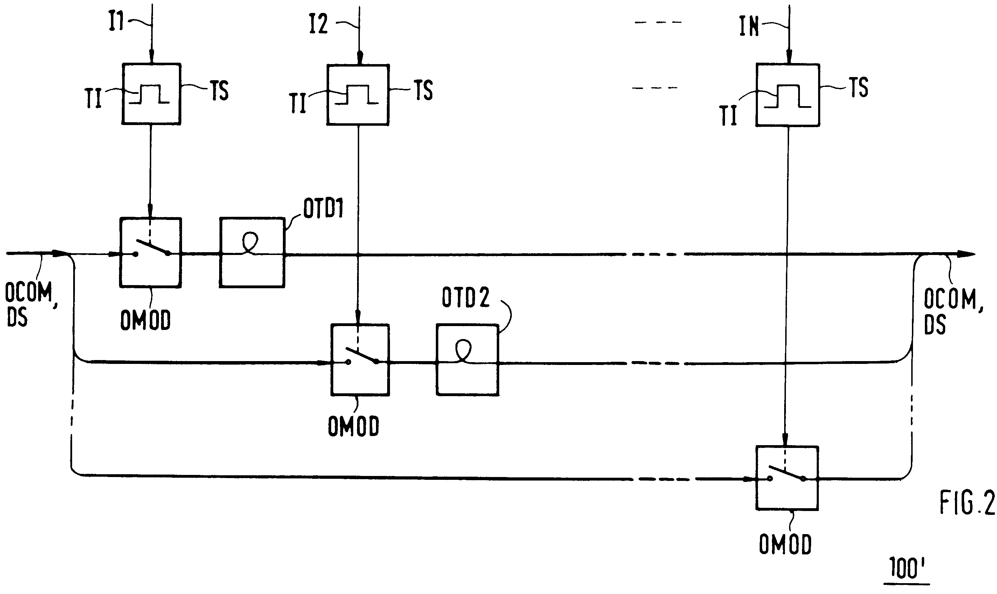

Im folgenden wird die erfindungsgemäße Ausführungsform nach Fig. 2 beschrieben. Diese enthält N Ti:LiNb03-Schalter OTDM mit jeweils einem elektrischen Steuereingang,
N-1 Lichtwellenleiter-Schleifen OTD1, OTD2, ... zur optischen Zeitverzögerung und
N aus jeweils einem UND-Logik-Gatter bestehende elektrische Schaltglieder TS.

Analog zu den in der Schaltung nach Fig. 1 auftretenden Datenströmen I1, ..., IN und Impulsen treten hier in der Vorrichtung nach Fig. 2 im Zeitverlauf gleichwertige Signale auf, wie sie in Fig. 4 dargestellt sind.

Der zeitliche Versatz der optischen Impulse, welche zum seriellen Datenstrom DS ineinander verschachtelt werden, wird hier durch unterschiedliche optische Zeitverzögerungsglieder OTD1, OTD2, ... gewährleistet. Deren Verzögerungszeiten unterscheiden sich untereinander um jeweils das Schalt-Zeitintervall TI.

Durch Aufteilung des Lichtwellenleiters OCOM in N optische Teilzweige ist eine separate, unabhängige optische Modulation gegeben, welche mittels hellgetasteter optischer TI:LiNb03-Schalter erfolgt. Die in jedem Teilzweig erzeugten und zeitlich versetzten optischen Impulse werden über einen optischen Verbinder auf den Lichtwellenleiter geführt.

Die parallele Struktur des Schaltungsaufbaus erlaubt eine modulare Erweiterung der Vorrichtung. Alle Teilzweige sind hierbei signaltechnisch gleichberechtigt, was zu einer hohen Betriebssicherheit der Vorrichtung beiträgt. So können einzelne Modulatoransteuerungen ausfallen, d.h. der optische Schalter verharrt in Ruhestellung und bleibt geöffnet, ohne daß die Gesamtschaltung funktionsunfähig wird.

Die beschriebene Vorrichtung nach Fig. 2 stellt einen optischen Zeitvielfach-Sender dar. Sie wird über den Lichtwellenleiter mit Konstantlicht gespeist.

Mittels einer Steuereinheit läßt sie sich jedoch auch als hellgetasteter Drop-In-Multiplexer in einem Lichtwellenleiter-Ring einsetzen. Die Steuereinheit muß hierzu bei Ring-Datenverkehr ausschließlich einen Teilzweig optisch durchschalten.

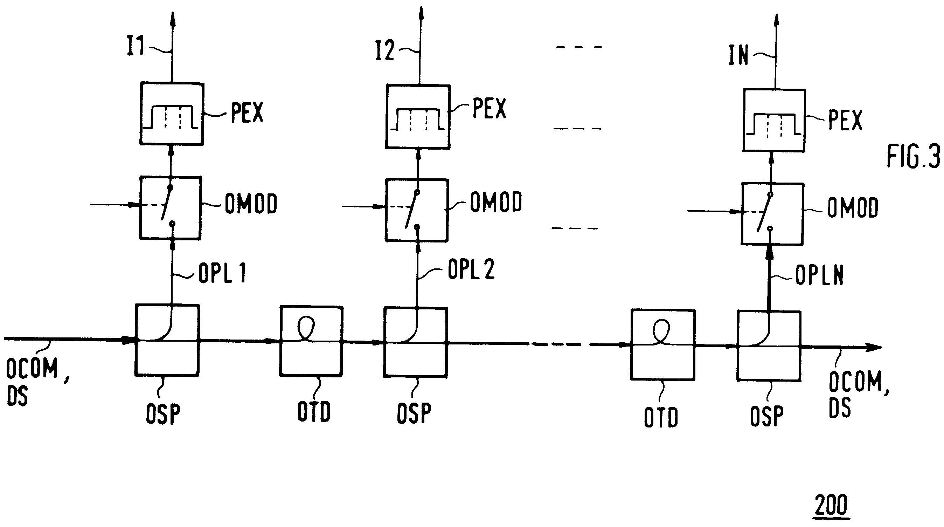

Als technisches Pendant zu den Vorrichtungen nach Fig. 1 und Fig. 2 ist die in der Fig. 3 dargestellte Schaltung zu verstehen. Diese erlaubt eine erfindungsgemäße Seriell-Parallel-Umsetzung von einem seriellen Datenstrom DS in N Datenströmen I1, ..., IN.

Durch die Reihenschaltung von N optischen Verzweigern OSP wird der serielle Datenstrom N-fach von einem Lichtwellenleiter in jeweils einen optischen Teilzweig OPL1, ..., OPLN abgezweigt. Von dem zweiten bis zum N-ten optischen Verzweiger ist jedem eine Lichtwellenleiter-Schleife OTD als optisches Zeitverzögerungsglied vorgeschaltet.

Der serielle Datenstrom, welcher aus optischen Impulsen mit der Zeitdauer TI besteht, wird in den Lichtwellenleiter-Schleifen jeweils um die Zeitdauer TI verzögert und somit um diese zeitversetzt in die optischen Teilzweige abgeleitet.

Die in den Teilzweigen jeweils integrierten optischen Schalter OMOD werden zeitgleich im Takt angesteuert, so daß diese für eine Zeitdauer TI durchschalten und danach für N-1 Zeitdauer geöffnet sind.

Durch Synchronisierung des Taktes mit dem seriellen Datenstrom DS erhält man an den Ausgängen der optischen Schalter jeweils eine Folge optischer Impulse, aus welchen durch Verschachtelung nach dem Zeitvielfach-Verfahren der serielle Datenstrom gebildet ist. Die einzelnen Impulse werden in optischen Impulsdehnungsgliedern PEX zeitlich auf die Daten-Impulsbreite PW gedehnt, welche der N-fachen Zeitdauer TI entspricht.

Die optischen Impulsdehnungsglieder sind jeweils aus einem optischen Verzweiger, N Lichtwellenleiter-Schleifen und einem optischen Verbinder aufgebaut. Ein Eingangsimpuls des Impulsdehnungsglied wird auf die Lichtwellenleiter-Schleifen parallel verzweigt, welche diesen um das 1-fache bis zum N-fachen der Zeitdauer TI verzögern. Der optische Verbinder setzt die zeitversetzten Teil-Impulse zu einem Gesamtimpuls mit der Impulsbreite PW zusammen und führt diesen zum Ausgang des Impulsdehnungsglieds.

An den Ausgängen der Impulsdehnungsglieder werden demnach N optische Datenströme abgeleitet, die den mittels den Vorrichtungen nach Fig. 1 oder Fig. 2 eingespeisten Datenströmen I1, ..., IN entsprechen.

Die Vorrichtung nach Fig. 3 ist sowohl innerhalb eines Lichtwellenleiter-Ringes als aufschaltbarer, optischer Zeitvielfach-Empfänger, wie auch am Ende eines Lichtwellenleiters als Zeitvielfach-Endempfänger einsetzbar.

## Patentansprüche

1. Vorrichtung (100, 100') zur Parallel-Seriell-Umsetzung von N zeitgleichen Datenströmen (I1, I2, ..., IN) mit einer konstanten Daten-Impulsbreite (PW) auf eine optische Übertragungsstrecke (OCOM) mittels folgenden funktionell zusammenwirkenden Elementen:
(1) N optische Modulatoren (OMOD) sind in die optische Übertragungsstrecke eingegliedert;
(2) jeder optische Modulator wird jeweils über ein Schaltglied (TS) von einem der Datenströme gesteuert;
(3) die Schaltglieder verringern gleichzeitig die Daten-Impulsbreite auf ein Zeitintervall (TI), welches nicht größer als der N-te Teil der Daten-Impulsbreite ist;
(4) der Datenstrom wird gemäß (2) und (3) in eine aus kurzen optischen Impulsen dargestellte Datenreihe (Dn) zur Eingliederung in die optische Übertragungsstrecke umgesetzt;
(5) mindestens N-1 optische Zeitverzögerungsglieder (OTD; OTD1, OTD2 ...) sind jeweils einem der optischen Modulatoren nachgeschaltet und gewährleisten eine überlappungsfreie serielle Eingliederung der kurzen optischen Impulse in die optische Übertragungsstrecke.

2. Vorrichtung nach Anspruch 1,
dadurch gekennzeichnet, daß
die optischen Modulatoren in ein beliebiges Teilstück der optischen Übertragungsstrecke eingegliedert sind, welche bereits zeitweise optische Datenimpulse führt und die Parallel-Seriell-Umsetzung dann erfolgt, wenn keine optischen Datenimpulse geführt werden.

3. Vorrichtung nach Anspruch 1,
dadurch gekennzeichnet, daß
die optischen Modulatoren in den Anfangsabschnitt der optischen Übetrtragungsstrecke eingegliedert sind, welcher an eine Konstantlichtquelle gekoppelt ist.

4. Vorrichtung (200) zur
Seriell-Parallel-Umsetzung von einem seriellen Datenstrom (DS) in N Datenströme (I1, I2, ..., IN), welcher eine bitweise Verschachtelung der N Datenströme darstellt
und auf einer optischen Übertragungsstrecke (OCOM) geführt wird,
mittels folgenden funktionell zusammenwirkenden Elementen:
(1) mindestens ein optischer Verzweiger (OSP) ist in die optische Übertragungsstrecke eingegliedert, so daß von dieser N optische Teilzweige (OPL1, OPL2, ..., OPLN) abgezweigt werden;
(2) N optische Modulatoren (OMOD) sind jeweils mit einem nachgeschalteten Impulsdehnungsglied (PEX) an einen der optischen Teilzweige angekoppelt;
(3) N-1 optische Zeitverzögerungsglieder (OTD) sind mit jeweils einem der optischen Verzweiger verschaltet und gewährleisten eine parallele Selektion der N Datenströme aus dem seriellen Datenstrom mittels den optischen Modulatoren.
